# EUROPÄISCHE PATENTSCHRIFT

(11) **EP 2 352 996 B1**
(45) Veröffentlichungstag und Bekanntmachung des Hinweises auf die Patenterteilung: **18.12.2019**
(21) Anmeldenummer: 09740267.1
(22) Anmeldetag: 09.10.2009
(51) Int. Cl.: G01N 29/22, G01N 29/24, B06B 1/04

(54) **ELEKTROMAGNETISCH-AKUSTISCHER MESSWANDLER UND ULTRASCHALL-PRÜFSYSTEM DAMIT**
ELECTROMAGNETIC-ACOUSTIC TRANSDUCER AND ULTRASONIC TEST SYSTEM HAVING THE SAME
TRANSDUCTEUR ÉLECTROMAGNÉTIQUE-ACOUSTIQUE ET SYSTÈME DE CONTRÔLE À ULTRASONS LE CONTENANT

(30) Priorität: 24.10.2008 DE 102008054250
(43) Veröffentlichungstag der Anmeldung: 10.08.2011
(73) Patentinhaber: Institut Dr. Foerster GmbH & Co. KG, 72766 Reutlingen (DE)
(72) Erfinder: EGE, Michael, 72667 Schlaitdorf (DE); WANNER, Jürgen, 72793 Pfullingen (DE)
(74) Vertreter: Patentanwälte Ruff, Wilhelm, Beier, Dauster & Partner mbB
(86) Internationale Anmeldenummer: PCT/EP2009/007251
(87) Internationale Veröffentlichungsnummer: WO 2010/046036

(56) Entgegenhaltungen:
- DE-A1- 19 915 099
- DE-C1- 4 228 426
- DE-T5-112006 001 894
- US-A- 4 337 662

## Beschreibung

### HINTERGRUND UND STAND DER TECHNIK

Die Erfindung bezieht sich auf einen elektromagnetisch-akustischen Messwandler zur Ultraschallprüfung von im Wesentlichen aus elektrisch leitfähigem Material bestehenden Prüflingen sowie auf ein Ultraschall-Prüfsystem, das mindestens einen solchen elektromagnetisch-akustischen Messwandler aufweist.

Die Ultraschallprüfung ist ein zerstörungsfreies, akustisches Prüfverfahren zum Prüfen von Prüflingen aus schallleitfähigen Werkstoffen, wie beispielsweise Metallen. Besonders die Möglichkeit, auch unter der Prüflingsoberfläche liegende interne Fehler nachweisen zu können, macht die Ultraschallprüfung für viele Anwendungen attraktiv. Bei konventionellen Prüfsystemen auf Ultraschallbasis werden die zur Prüfung verwendeten Ultraschallwellen mit einem piezo-elektrischen Wandler erzeugt und über ein Koppelmedium, beispielsweise Wasser, in den Prüfling eingeleitet.

Elektromagnetisch-akustische Messwandler (Electro Magnetic Acoustic Transducers, EMATs) sind eine Alternative zu dieser konventionellen Ultraschalltechnologie und können bei der Prüfung aller hinreichend elektrisch leitenden Materialien eingesetzt werden. Mit einem elektromagnetisch-akustischen Messwandler, der im Folgenden auch mit dem Kürzel EMAT bezeichnet wird, werden Ultraschallwellen mit Hilfe des elektromagnetischen Prinzips direkt im Prüflingsmaterial erzeugt. Hierzu hat ein EMAT ein Magnetsystem zur Erzeugung eines zum Eindringen in den Prüfling vorgesehenen Magnetfeldes sowie eine induktive Spulenanordnung zur Erzeugung eines diesem Magnetfeld im Prüfling überlagerten elektromagnetischen Wechselfeldes sowie zur Erfassung von aus dem Prüfling emittierten elektromagnetischen Wechselfeldern. Die mit hochfrequenter Wechselspannung erregte Spulenanordnung induziert im oberflächennahen Bereich des Prüflings Wirbelströme. Die dabei bewegten Ladungsträger bewegen sich hierbei in dem durch das Magnetsystem im Prüfling erzeugten Magnetfeld. Die dadurch erzeugte Lorentz-Kraft wirkt als periodische Kraft auf die Festkörperstruktur des Prüflingsmaterials und erzeugt auf diese Weise direkt innerhalb des Prüflings Ultraschallwellen, die sich im Prüflingsmaterial ausbreiten und zur Prüfung genutzt werden können. Die Ultraschall-Prüfung mittels EMAT kommt daher prinzipbedingt ohne Koppelmedium, wie beispielsweise Wasser aus, so dass die EMAT-Technologie z.B. auch zur Prüfung von Metallen im heißen Zustand angewendet werden kann. Die Ultraschall-Prüfung mittels EMAT kann sowohl zur Fehlerprüfung in Metallen und Metalllegierungen, als auch zur Bestimmung von geometrischen Parametern, wie zum Beispiel Wanddicke, Durchmesser und dergleichen von Prüflingen aus elektrisch leitfähigem Material eingesetzt werden.

Die Veröffentlichung DE 11 2005 000 106 T5 (entsprechend WO 2005/083419) beschreibt einen konventionellen elektromagnetisch-akustischen Messwandler, der ein Gehäuse mit einer dem Prüfling zuzuwendenden Arbeitsoberfläche hat. In dem Gehäuse sind ein Magnetsystem mit Permanentmagneten zur Erzeugung eines Dauermagnetfeldes sowie in der Nähe der Arbeitsoberfläche eine induktive Spulenanordnung zur elektromagnetischen Erzeugung von Abtastimpulsen und zum Empfang von vom Prüfling emittierten Impulsen angeordnet. Das Magnetsystem hat mindestens drei Dauermagnete, die einen rechteckigen Querschnitt aufweisen und unmittelbar benachbart parallel zur Arbeitsoberfläche des EMAT im Gehäuse angeordnet sind. Dabei hat der mittlere Magnet im Bezug auf die Arbeitsoberfläche eine vertikale Polarisierung, während die jeweils seitlich benachbarten Magnete eine horizontale Polarisierung aufweisen. Zwischen den Dauermagneten des Magnetsystems und der Spulenanordnung sind Magnetflusskonzentratoren so angebracht, dass der von dem mittleren Magneten ausgehende magnetische Fluss jeweils auf eine unter einem Konzentrator angebrachte Induktionsspule konzentriert wird. Der so aufgebaute EMAT soll eine hohe Empfindlichkeit und einen ziemlich breiten Arbeitsbereich haben und gleichzeitig kompakt aufgebaut sein.

Die WO 2007/013836 A1 zeigt einen elektromagnetisch-akustischen Messwandler mit einem äußeren Gehäuse und einem innerhalb des äußeren Gehäuses angebrachten inneren Gehäuse. Im inneren Gehäuse ist das Magnetsystem mit mehreren Permanentmagneten untergebracht. An einer Trägerplatte des äußeren Gehäuses sind die induktive Spulenanordnung und zugeordnete Magnetfeldkonzentratoren so angebracht, dass in einer Arbeitsstellung des inneren Gehäuses das vom Magnetsystem erzeugte Permanentmagnetfeld auf die Spulenanordnung konzentriert wird. Das innere Gehäuse ist innerhalb des äußeren Gehäuses derart beweglich angebracht, dass es mit Hilfe eines am äußeren Gehäuse angebrachten Antriebes durch Verschiebung oder Verdrehung aus der Arbeitsstellung (Magnetflusskontakt zur Spulenanordnung) herausbewegt werden kann, wodurch der EMAT dann außer Funktion gesetzt wird. Dadurch soll es möglich sein, dass der Messwandler ohne Behinderung durch das vom Magnetsystem erzeugte Magnetfeld rasch von einem Prüfling abgehoben werden kann.

Die induktive Spulenanordnung sollte sich während der Prüfung möglichst nahe der Oberfläche des Prüflings befinden, um eine hohe Prüfempfindlichkeit zu erreichen. Zum Schutz der Spulenanordnung befindet sich bei bekannten elektromagnetisch-akustischen Messwandlern vor der Spulenanordnung, das heißt zwischen Spulenanordnung und Prüflingsoberfläche, eine Schutzeinrichtung aus verschleißfestem Material, beispielsweise in Form einer Schutzplatte aus Keramik. Um den Abstand zwischen den Spulen der Spulenanordnung und dem Prüfling nicht mehr als nötig zu vergrößern, sollte das Material der Schutzschicht nur eine geringe Dicke haben. Als weitere Randbedingung sollte das Material keine wesentlich elektrische Leitfähigkeit aufweisen, was durch das Prinzip des Verfahrens der Erzeugung des Ultraschalls bedingt ist.

In der Regel werden elektromagnetisch-akustische Messwandler innerhalb einer Prüfvorrichtung eingesetzt, um den Prüfvorgang automatisiert durchzuführen. Dabei wird ein EMAT in der Weise über die Oberfläche eines zu untersuchenden Prüflings geführt, dass der gesamte zu untersuchende Prüflingsbereich erfasst werden kann. Im industriellen Einsatz ist dabei eine möglichst kurze Prüfdauer gewünscht, um einen möglichst hohen Durchsatz an geprüftem Material zu erreichen. Daher sind relativ hohe Relativgeschwindigkeiten zwischen EMAT und Prüflingsmaterial angestrebt.

Bei der Prüfung von ferromagnetischen Materialien können relativ starke magnetische Anziehungskräfte zwischen den Prüflingen und einem entlang der Prüflingsoberfläche geführten EMAT auftreten, was im Falle eines Schleifkontaktes zwischen EMAT und Prüflingsoberfläche insbesondere bei relativ hohen Relativgeschwindigkeiten zu einem erheblichen Verschleiß der Schutzelemente führen kann.

Als Alternative kann die Abtastung der Prüflingsoberfläche ohne Berührungskontakt derart durchgeführt werden, dass sich zwischen der Prüflingsoberfläche und dem EMAT ein kleiner Luftspalt befindet, der mindestens so groß sein sollte, dass Kollisionen zwischen dem EMAT und dem Prüflingsmaterial, bedingt beispielsweise durch Unregelmäßigkeiten der Prüflingsoberfläche nicht oder nur selten auftreten. Jede Vergrößerung des Abstands zwischen Prüflingsoberfläche und Spulenanordnung geht jedoch mit einer drastischen Abnahme der Prüfempfindlichkeit einher.

### AUFGABE UND LÖSUNG

Es ist eine Aufgabe der Erfindung, einen elektromagnetisch-akustischen Messwandler für die Ultraschallprüfung bereitzustellen, der es erlaubt, Prüflinge mit hoher Relativgeschwindigkeit, aber ohne wesentliche Einschränkungen hinsichtlich Standzeit des EMAT oder Prüfempfindlichkeit abzutasten.

Zur Lösung dieser Aufgabe stellt die Erfindung einen elektromagnetisch-akustischen Messwandler mit den Merkmalen des Anspruchs 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Ein erfindungsgemäßer elektromagnetisch-akustischer Messwandler hat ein Magnetsystem zur Erzeugung eines zum Eindringen in den Prüfling vorgesehenen Magnetfeldes und eine induktive Spulenanordnung zur Erzeugung eines dem Magnetfeld im Prüfling überlagerten elektromagnetischen Wechselfeldes und zur Erfassung von aus dem Prüfling emittierten elektromagnetischen Wechselfeldern. Dabei ist das Magnetsystem in einer Magnetisierungseinheit angeordnet und die Spulenanordnung ist in einer von der Magnetisierungseinheit gesonderten Sondeneinheit angeordnet und die Sondeneinheit ist relativ zur Magnetisierungseinheit im Bereich des Magnetfeldes beweglich gelagert.

Die Sondeneinheit ist nicht starr mit der Magnetisierungseinheit verbunden, sondern gegenüber dieser beweglich gehalten, so dass sich die Sondeneinheit während des Betriebes des Messwandlers relativ zur Magnetisierungseinheit auf die Magnetisierungseinheit zu oder von der Magnetisierungseinheit weg bewegen kann. Zwischen der Magnetisierungseinheit und der Sondeneinheit befindet sich ein materialfreier Zwischenraum mit variabler Größe, der seine Größe bzw. seine Dicke verändert, wenn die beiden Einheiten relativ zueinander bewegt werden. Hierdurch kann ferromagnetisches Prüfmaterial unter Beibehaltung eines Schleifkontaktes zwischen Sondeneinheit und Prüflingsoberfläche mit hoher Prüfempfindlichkeit unter geringer Verschleißbelastung geprüft werden, da die starke magnetische Anziehungskraft zwischen der Magnetisierungseinheit und dem ferromagnetischen Prüfmaterial keinen oder nur sehr wenig Einfluss auf diejenige Kraft hat, mit der die Sondeneinheit auf der Prüflingsoberfläche aufliegt.

Aufgrund der Relativbeweglichkeit der Sondeneinheit gegenüber der Magnetisierungseinheit bzw. aufgrund der fehlenden starren Kopplung zwischen Magnetisierungseinheit und Sondeneinheit kann die zu bewegende Masse beim Überfahren von Oberflächenunregelmäßigkeiten relativ gering sein, so dass die Sondeneinheit der Prüflingsoberfläche ohne weiteres folgen kann, ohne dass übermäßige Trägheitskräfte auftreten, die den Verschleiß des Messwandlers fördern oder sogar zu einer Zerstörung führen könnten.

Insbesondere im industriellen Umfeld muss die Prüfung häufig unter rauen Umgebungsbedingungen durchgeführt werden, beispielsweise an noch heißen Prüflingen mit verzunderten Oberflächen. Für solche Anwendungen ist es vorteilhaft, dass zwischen der Magnetisierungseinheit und der Sondeneinheit ein Zwischenraum mit variabler Größe liegt und dass der Zwischenraum mit Hilfe einer flexiblen Hülle verschmutzungsdicht gekapselt ist. Dadurch kann gewährleistet werden, dass in den Zwischenraum zwischen Magnetisierungseinheit und Sondeneinheit kein Schmutz eindringen kann, obwohl gleichzeitig die Beweglichkeit beider Einheiten relativ zueinander sichergestellt ist. Die flexible Hülle kann beispielsweise durch einen Faltenbalg aus geeignetem flexiblem Material gebildet sein, wobei der Faltenbalg beispielsweise als Kunststoffbalg oder als Lederbalg ausgeführt sein kann.

Es gibt verschiedene Möglichkeiten, die Sondeneinheit in der richtigen Relativposition zur Magnetisierungseinheit zu halten und gleichzeitig die erwünschte begrenzte Relativbeweglichkeit der Sondeneinheit gegenüber der Magnetisierungseinheit sicherzustellen. Eine Möglichkeit besteht darin, dass die Sondeneinheit mit Hilfe einer elastischen nachgiebigen Halterung an der Magnetisierungseinheit befestigt ist. Die Halterung kann so ausgestaltet sein, dass die Sondeneinheit im kräftefreien Zustand ihre Nominalposition im Nominalabstand zur Magnetisierungseinheit einnimmt und diese Nominalposition bei Einwirkung äußerer Kräfte verlassen kann. Die elastisch nachgiebige Halterung kann die einzige Halterung der Sondeneinheit sein. Besonders vorteilhaft kann es sein, wenn die elastisch nachgiebige Halterung durch einen Faltenbalg gebildet ist, der gleichzeitig auch den Zwischenraum zwischen Magnetisierungseinheit und Sondeneinheit verschmutzungsdicht abdichten kann und somit eine Doppelfunktion erfüllt. Sonst ist es auch möglich, dass die Magnetisierungseinheit an einer ersten Halteeinrichtung und die Sondeneinheit an einer von der ersten Halteeinrichtung gesonderten zweiten Halteeinrichtung befestigt ist. Die Halteeinrichtungen können unabhängig voneinander an einem Träger für den Messwandler gelenkig oder auf andere Weise beweglich angebracht sein. Bei einer Ausgestaltung ist die zweite Halteeinrichtung, welche die Sondeneinheit hält, gelenkig mit der ersten Halteeinrichtung verbunden. Hierdurch kann erreicht werden, dass durch Bewegung der ersten Halteeinrichtung die Kombination aus Magnetisierungseinheit und Sondeneinheit, also der gesamte EMAT verlagert werden kann, während durch Relativbewegung der ersten Halterung gegenüber der zweiten Halterung die Sondeneinheit gegenüber der Magnetisierungseinheit verlagert wird.

Bei dem erfindungsgemäßen Messwandler ist der Zwischenraum zwischen dem Magnetsystem und der Spulenanordnung frei von Magnetfeldkonzentratoren. Dadurch kann der Abstand zwischen dem Magnetsystem und der Spulenanordnung im Vergleich zu herkömmlichen EMATs erheblich verringert werden. Die durch die Verringerung des Abstandes mögliche Steigerung der Prüfempfindlichkeit kann den Effekt der fehlenden Magnetfeldkonzentration teilweise oder ganz kompensieren.

Bei manchen Ausführungsformen beträgt ein Nominalabstand zwischen dem Magnetsystem und der Spulenanordnung weniger als 8 mm, wobei der Abstand auch weniger als 7 mm oder weniger als 6 mm oder weniger als 5 mm betragen kann. Bei einem begrenzt variablen Abstand zwischen Spulenanordnung und Magnetisierungseinheit kann der Abstand etwas variieren, beispielsweise um ± 2 mm oder um ± 3 mm um einen Nominalabstand von 3 mm oder 4 mm oder 5 mm. Der Abstand zwischen dem Magnetsystem und der Spulenanordnung kann auch größer sein.

Um zu verhindern, dass es bei außergewöhnlichen Betriebsbedingungen zu einem kritischen Berührungskontakt zwischen Sondeneinheit und Magnetisierungseinheit kommen kann, ist gemäß einer Ausgestaltung der Erfindung eine Abstandhalteeinrichtung zur Begrenzung der gegenseitigen Auslenkung zwischen Magnetisierungseinheit und Sondeneinheit auf einen endlichen Mindestabstand vorgesehen, so dass ein Berührungskontakt zwischen diesen relativ beweglichen Baugruppen ausgeschlossen ist. Zwischen der Sondeneinheit und der Magnetisierungseinheit kann sich eine Schicht aus elastisch nachgiebigem Material oder eine andere aufschlagdämpfende Einrichtung befinden. Die aufschlagdämpfende Schicht kann durch einen Abschnitt des Faltenbalgmaterials gebildet sein.

Bei einer Ausgestaltung sind an einem Gehäuse der Magnetisierungseinheit Abstandhalter mit Stützabschnitten zur direkten Abstützung der Abstandhalter auf der Oberfläche des Prüflings angebracht, wobei die Abstandhalter so bemessen sind, dass bei Auftreffen der Abstandhalter auf der Prüflingsoberfläche noch ein kleiner Abstand zwischen der maximalen in Richtung Magnetisierungseinheit gedrückten Sondeneinheit und der Magnetisierungseinheit verbleibt.

Die Spulenanordnung kann einen konventionellen Aufbau haben. Es wurden jedoch neuartige Spulenanordnungen entwickelt, die insbesondere auch bei Abwesenheit von Magnetfeldkonzentratoren beste Prüfergebnisse ermöglichen. Eine Ausführungsform einer Spulenanordnung hat mehrere nebeneinander angeordnete Einzelspulen, wobei Leitungsabschnitte unmittelbar benachbarter Einzelspulen in einen Überlappungsbereich gegenseitig überlappen. Bei den Einzelspulen handelt es sich normalerweise um kernlose Spulen mit einer oder mehreren Wicklungen, wobei die Wicklungen eine Spulenachse definieren. Der Überlappungsbereich kann jeweils mittig zwischen benachbarten Spulenachsen liegen. Werden bei einer solchen Spulenanordnung unmittelbar benachbarte Einzelspulen gegenphasig geschaltet, so dass sie im Betrieb der Vorrichtung mit umgekehrter Phase bzw. mit 180° Phasenversatz von einer Einzelspule zur nächsten betrieben werden, so kann erreicht werden, dass sich unerwünschte Beiträge der im Überlappungsbereich überlappenden Leitungsabschnitte der Einzelspulen gegenseitig aufheben. Insbesondere in diesen Fällen kann auf den Einsatz von Magnetfeldkonzentratoren dann komplett verzichtet werden, zu Gunsten eines kleineren Abstandes zwischen Magnetisierungseinheit und Sondeneinheit. Dies ist für die Empfindlichkeit des EMAT sehr förderlich.

Die Spulenanordnung kann mit gewickelten Einzelspulen aufgebaut sein. Wenn die Spulenanordnung in Form von Leiterbahnen vorliegt, die auf einer ggf. flexiblen Trägerplatte aus elektrisch isolierendem Material aufgebracht sind, ist der gemeinsame Einbau und Ausbau bei der Erstmontage oder bei der Wartung oder Reparatur besonders einfach. Die Leiterbahnen können durch Bedrucken oder ein anderes Beschichtungsverfahren auf die Trägerplatte aufgebracht werden.

Bei der Prüfung oder Messung von Prüfmaterial kann der EMAT die Materialoberfläche derart berührungslos abtasten, dass sich zwischen der Sondeneinheit und der Materialoberfläche ein kleiner Luftspalt befindet, beispielsweise mit einer Dicke bis zu ca. 5 mm. Es ist auch möglich, dass die Sondeneinheit in Berührungskontakt mit der Materialoberfläche steht und bei Relativbewegung auf dieser schleift. Im Falle einer unebenen Materialoberfläche kann die Sondeneinheit aufgrund der Flexibilität bzw. Beweglichkeit in Bezug auf die Magnetisierungseinheit dieser Oberfläche folgen, auch wenn die Magnetisierungseinheit ihre Lage nicht ändert.

Mit Hilfe erfindungsgemäß aufgebauter elektromagnetisch-akustischer Messwandler können unterschiedliche Messaufgaben durchgeführt werden. Hierzu gehören die Fehlerdetektion von (eindimensionalen) Punktdefekten, (zweidimensionalen) flächenhaften Defekten oder Säumen sowie von dreidimensionalen Volumendefekten an der Prüflingsoberfläche oder im Inneren eines Prüflings. Weiterhin können einige geometrische Parameter, wie beispielsweise die Materialdicke, die Wanddicke eines Rohres und/oder Abstände im Prüfmaterial bestimmt werden. Schließlich ist es auch möglich, gewisse Materialeigenschaften, wie beispielsweise die Härte oder elastische Konstanten zu bestimmen. Als Prüflingsmaterial kommen alle hinreichend elektrisch leitfähigen Materialien in Betracht, beispielsweise verschiedene Stähle sowie nickel- oder kobalthaltige Materialien, aber auch Nicht-Eisenmetalle wie Aluminium, Kupfer und viele andere Metalle. Der Messwandler kann an unterschiedlichen Prüfungsgeometrien eingesetzt werden, beispielsweise zur kontinuierlichen Messung von langgestreckten Gegenständen wie Stäben oder Rohren mit gewalzter oder blanker Oberfläche, Platten oder anderem Halbzeug, aber auch zur Messung an fertigen Bauteilen unterschiedlicher Geometrien.

Die Erfindung bezieht sich auch auf eine Prüfvorrichtung zur Ultraschallprüfung von im Wesentlichen aus elektrisch leitfähigem Material bestehenden Prüflingen. Diese zeichnet sich dadurch aus, dass sie mindestens einen elektromagnetisch-akustischen Messwandler gemäß der Erfindung aufweist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können.

### KURZBESCHREIBUNG DER ZEICHNUNGEN

- Fig. 1: zeigt einen Querschnitt durch eine Ausführungsform eines elektromagnetisch-akustischen Messwandlers, der in Schleifkontakt mit einer zylindrischen Prüflingsoberfläche eines Rundstabes steht;
- Fig. 2: zeigt einen Längsschnitt durch die in Figur 1 gezeigte Anordnung mit Schutzvorrichtungen zum Schutz der Messanordnung vor mechanischen Beschädigungen;
- Fig. 3: zeigt eine Draufsicht auf eine Ausführungsform einer Spulenanordnung;
- Fig. 4: zeigt eine Schemadarstellung zur Illustration einer gegenphasigen Anregung unmittelbar benachbarter Einzelspulen der Spulenanordnung; und
- Fig. 5: zeigt einen elektromagnetisch-akustischen Messwandler mit daran angebrachten Halteeinrichtungen zum Einbau in einen Rotierkopf einer Prüfvorrichtung.

### DETAILLIERTE BESCHREIBUNG DER BEVORZUGTEN AUSFÜHRUNGSFORMEN

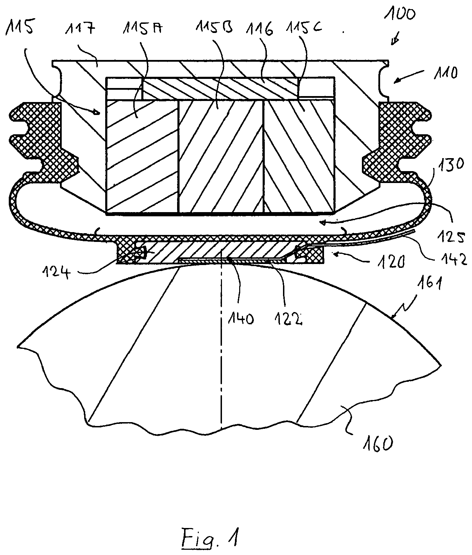

Figur 1 zeigt einen Querschnitt durch eine Ausführungsform eines elektromagnetisch-akustischen Messwandlers (EMAT) 100, der in Schleifkontakt mit einer zylindrischen Prüflingsoberfläche 161 eines Prüflings 160 in Form eines zylindrischen Stabes aus einem ferromagnetischen Stahl steht. Der EMAT hat eine Magnetisierungseinheit 110 sowie eine davon gesonderte Sondeneinheit 120, die über einen beidseitig geschlossenen Faltenbalg 130 aus elastischem Kunststoffmaterial mit der Magnetisierungseinheit derart beweglich verbunden ist, dass die Lage der Sondeneinheit relativ zur Magnetisierungseinheit unter Verformung des Faltenbalges und damit verbundener Vergrößerung oder Verkleinerung des gegenseitigen Abstandes stufenlos veränderbar ist. Die Sondeneinheit befindet sich dabei immer im Bereich des vom Magnetsystem erzeugten Magnetfeldes. Zwischen der Magnetisierungseinheit und der mit Abstand davon angeordneten Sondeneinheit 120 befindet sich ein materialfreier Zwischenraum 125 mit variablem Volumen, der von dem Faltenbalg 130 seitlich allseitig umschlossen und dadurch gegen Eindringen von Staub und anderen Verunreinigungen von außen geschützt ist.

Die Magnetisierungseinheit 110 umfasst ein Magnetsystem 115 zur Erzeugung eines magnetischen Gleichfeldes, das im Betrieb des EMAT in oberflächennahe Bereiche des Prüflings 160 eindringt. Im Beispielsfall besteht das Magnetsystem 115 aus quaderförmigen Permanentmagneten 115A, 115B, 115C unterschiedlicher Polarisierung, wobei der mittlere Permanentmagnet 115B im Wesentlichen radial bzw. senkrecht zur Prüflingsoberfläche polarisiert ist, während die unmittelbar nach außen angrenzenden äußeren Magnete 115A, 115C senkrecht dazu bzw. im Wesentlichen parallel zur Prüflingsoberfläche polarisiert sind. Zur magnetischen Abschirmung des Magnetfeldes ist auf der der Sondeneinheit abgewandten Seite der Permanentmagnete eine ferromagnetische Platte 116 angebracht. Die Permanentmagnete und die Abschirmplatte sind fest in ein Gehäuse 117 eingebaut, welches die Magnetisierungseinheit auf der dem Prüfling abgewandten Seite abschließt.

Die Anzahl und Form der Magnete des Magnetsystems kann auch anders als dargestellt sein. Insbesondere kann die Erzeugung des Magnetfeldes auch mit Hilfe von Elektromagneten erfolgen. In der Regel ist das vom Magnetsystem erzeugte Magnetfeld ein Gleichfeld, es ist jedoch auch möglich, mit Hilfe von Elektromagneten ein niederfrequentes oder höherfrequentes Wechselfeld zu erzeugen. Über eine Steuerung der Frequenz des Wechselfeldes kann die Flussdichtekonzentration an der Oberfläche des Prüflings eingestellt bzw. verändert werden.

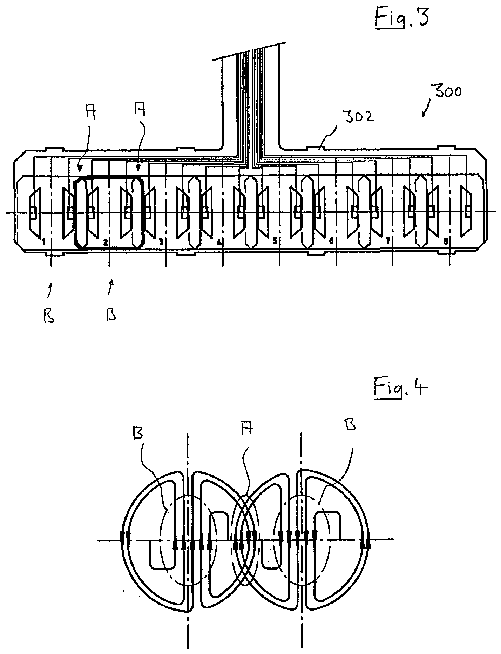

Die Sondeneinheit 120 enthält eine induktive Spulenanordnung 140, von der eine Ausführungsform anhand der Figuren 3 und 4 später näher erläutert wird. Es kann sich dabei um Spulen verschiedenen Designs handeln, die in unterschiedlicher Weise angeordnet sein können. Zum Schutz der Spulen befindet sich vor der Spulenanordnung auf der dem Prüfling zugewandten Seite eine dünne Schutzplatte 122, die aus einem elektrisch nicht leitenden oder schlecht leitenden Material mit hoher mechanischer Verschleißfestigkeit besteht. Im Beispielsfall besteht die Schutzplatte aus einer Verbundkeramik, bei der Keramikfasern in einer Keramikmatrix gebunden sind. Die Spulenanordnung und die Schutzplatte sind gemeinsam in einer flachen Ausnehmung eines verwindungssteifen Trägerrahmens 124 befestigt, der aus einem elektrisch nicht leitenden Material besteht und an den gezeigten schmalen Seitenflächen schwalbenschwanzförmige Nuten zur Befestigung des Trägerrahmens in einer flexiblen Aufnahme des Faltenbalges 130 hat. Da die Sondeneinheit 120 an der Außenseite des Faltenbalges angebracht ist, befindet sich ein Abschnitt des Faltenbalgmaterials zwischen der Sondeneinheit und der Magnetisierungseinheit und bildet eine elastisch nachgiebige Zwischenschicht, die als Abstandhalter einen direkten Berührungskontakt zwischen dem Trägerrahmen der Sondeneinheit 120 und der Magnetisierungseinheit 110 verhindert und eventuelle Schläge abdämpfen kann. Die Spulenanordnung 140 wird mit Hilfe von elektrischen Anschlussleitungen 142 an eine nicht dargestellte Steuerelektronik der Prüfvorrichtung angeschlossen.

Beim Einsatz des EMAT wird durch die Magnetisierungseinheit 110 ein starkes Magnetfeld im Bereich der Sondeneinheit 120 sowie in oberflächennahen Bereichen des Prüflings 160 erzeugt. Die Spulenanordnung enthält Erregerspulen, die bei entsprechender Ansteuerung mit hochfrequenter Wechselspannung ein hochfrequentes elektromagnetisches Erregungs-Wechselfeld erzeugen, welches dem Magnetfeld des Magnetsystems 115 überlagert ist und ebenfalls in oberflächennahe Bereiche des Prüflings eindringt. Die Erregerspulen sind mit einer geeigneten Elektronik verbunden und dadurch in der Lage, im Prüflingsmaterial kurze Ultraschall-Impulse zu erzeugen, deren Frequenz beispielsweise im MHz Bereich liegen kann. Um hierbei Ultraschallimpulse erzeugen zu können, muss das Prüflingsmaterial (Testmaterial) zumindest eine elektrische Leitfähigkeit aufweisen, so dass im Testmaterial bewegte Ladungsträger erzeugt werden, die sich im Magnetfeld der Magnetisierungseinheit bewegen und unter Einfluss der Lorentz-Kraft auf die Gitterstruktur des Prüflingsmaterials wirken und dadurch unmittelbar im Prüflingsmaterial Ultraschallwellen erzeugen. Bevorzugt ist das Prüflingsmaterial ferromagnetisch. Welche Art von Ultraschall (Frequenz, Ausrichtung) im Prüflingsmaterial erzeugt wird, hängt von der Richtung des vom Magnetsystem erzeugten Magnetfeldes sowie von der Auslegung der Erregungsspulen der induktiven Spulenanordnung und der Elektronik ab.

In der Spulenanordnung befinden sich auch Spulen zur Erfassung von aus dem Prüflingsmaterial emittierten Signal-Wechselfeldern. Es handelt sich dabei um Spulen, die ebenfalls mit einer geeigneten Elektronik verbunden sind und die geeignet sind, reflektierte Ultraschall-Signale aus dem Prüflingsmaterial zu empfangen. Diese Empfangsspulen können identisch mit den Sendespulen (Erregerspulen) sein, es können jedoch auch davon gesonderte Spulen vorgesehen sein. Durch Auswertung der empfangenen Signale können Aussagen über Fehler im Prüflingsmaterial sowie ggf. Aussagen über geometrische Parameter des Testmaterials (wie beispielsweise Durchmesser, Dicke oder Wanddicke) gemacht werden. Es ist auch möglich, aus den emittierten Signalen verschiedene elastische Parameter des Testmaterials zu bestimmen.

Der Vorgang des Erregens und des Empfangs von Ultraschallsignalen wird in dieser Anmeldung auch als Prüfung bezeichnet. Bei der Prüfung tritt in der Regel eine Relativbewegung zwischen dem EMAT und dem Prüfling auf. Auf eine Relativbewegung von EMAT und Prüfling kann z.B. bei Wanddickemessungen an Rohren auch verzichtet werden. Um eine gewünschte Relativbewegung zu erzeugen, kann z.B. ausschließlich der EMAT relativ zum (ruhenden) Prüfling bewegt werden. Es ist auch möglich, dass der EMAT ruht und nur der Prüfling bewegt wird, z.B. rotierend und/oder translatorisch. Auch eine Bewegung beider Komponenten ist möglich. Bei der Relativbewegung tritt eine Bewegung der Sondeneinheit 120 des EMAT relativ zur Oberfläche 161 des Prüflings 160 auf. Der Grad der Abdeckung der geprüften Oberfläche (vollständig oder mit Lücken) hängt dabei von den Anforderungen der Prüfaufgabe ab.

Bei dieser Bewegung kann die mit Hilfe des Faltbalges 130 elastisch nachgiebig gelagerte Sondeneinheit 120 der Oberfläche des Prüfmaterials folgen. Die Sondeneinheit wird dabei in der Regel durch elastische Kräfte mittels des Faltenbalges und ggf. durch Fliehkräfte geringfügig an die Prüflingsoberfläche angedrückt, wobei die Druckkraft jedoch so gering ist, dass bei einem Schleifkontakt zwischen der Prüflingsoberfläche 161 und der Schutzplatte 122 nur wenig Verschleiß auftritt. Es kann auch phasenweise berührungslos gearbeitet werden. Tritt beispielsweise in der überstrichenen Prüfbahn eine Oberflächenerhebung auf, so kann die relativ massearme Sondeneinheit der Erhebung durch Ausweichen in Richtung der Magnetisierungseinheit folgen, wobei sich dann der Luftspalt 125 kurzzeitig verringert. Je nach Beschaffenheit der Oberfläche wird sich also die Größe des Luftspaltes zwischen Magnetisierungseinheit und Sondeneinheit des EMAT mehr oder weniger stark verändern. Nicht gezeigte Lüftungskanäle sorgen dabei dafür, dass die Gesamtanordnung bei wechselndem Volumen innerhalb des Faltenbalges "atmen" kann, ohne dass Schmutzpartikel in den Innenraum des Faltenbalges eindringen können.

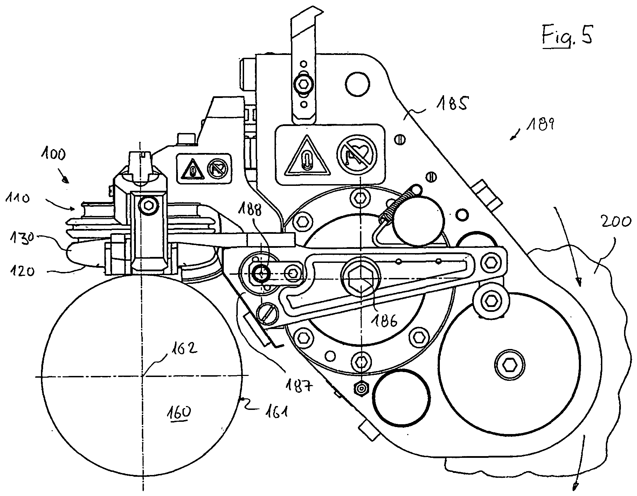

Günstig für die vorteilhafte relative Beweglichkeit der Sondeneinheit zur Magnetisierungseinheit ist es, wenn die Magnetisierungseinheit einerseits und die Sondeneinheit andererseits an verschiedenen, das heißt voneinander unabhängig beweglichen Halterungen befestigt sind. Eine Variante wird im Zusammenhang mit Figur 5 noch erläutert. Im Beispielsfall von Figur 1 ist die Magnetisierungseinheit 110 an einer nicht gezeigten Halterung befestigt, während die Sondeneinheit 120 über den als Halterung dienenden Faltbalg 130 direkt an der Magnetisierungseinheit gehaltert ist. Es ist also möglich, dass eine der beiden Halterungen (hier die Halterung für die Sondeneinheit) an der anderen Halterung (der Halterung für die Magnetisierungseinheit) befestigt ist. Es ist auch möglich, dass nur eine Halterung verwendet wird. In jedem Fall kann durch geeignete Auslegung der Halteeinrichtungen für Sondeneinheit und Magnetisierungseinheit erreicht werden, dass die starke magnetische Anziehungskraft zwischen der Magnetisierungseinheit 110 und dem ferromagnetischen Prüfmaterial keinen Einfluss auf die Kraft zwischen der Sondeneinheit 120 und der Materialoberfläche hat. Selbst bei Prüfung von ferromagnetischem Material im starken Magnetfeld des Magnetsystems treten somit nur geringe Andruckkräfte zwischen der Sondeneinheit und der Prüflingsoberfläche auf, wodurch die Standzeit der Sondeneinheit gegenüber herkömmlichen Systemen erheblich verlängert werden kann.

Kommt es bei der durchgeführten Prüfung zum Auftreten von magnetischem Zunder oder anderen Verunreinigungen, dann hat dies bei der gezeigten Ausführungsform insoweit keine negativen Auswirkungen auf die Funktion des Messwandlers, als der Zwischenraum 125 zwischen der Magnetisierungseinheit 110 und Sondeneinheit 120 durch den Faltbalg 130 staubdicht abgeschlossen ist.

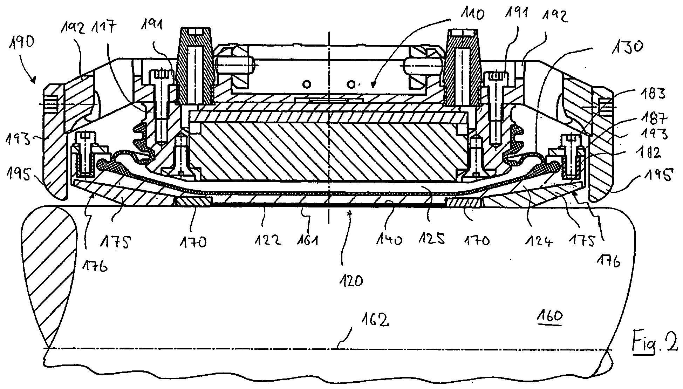

Elektromagnetisch-akustische Messwandler können beispielsweise bei fertigungsnahem Einsatz im industriellen Umfeld erheblichen mechanischen, thermischen und sonstigen Belastungen ausgesetzt sein, die sich nachteilig auf die Lebensdauer der Messwandler auswirken und im Falle von frühzeitigem Verschleiß oder beschädigungsbedingtem Ausfall zu Produktionsverzögerungen führen könnten. Anhand von Fig. 2 werden nun einige Schutzmechanismen erläutert, die einzeln oder in Kombination an einem Messwandler vorgesehen sein können, um dessen Funktionsfähigkeit auch in rauen Messumgebungen zuverlässig sicherzustellen. In der Längsschnitt-Darstellung von Fig. 2 sind bereits anhand von Fig. 1 erläuterte Funktionselemente und Funktionsgruppen mit den gleichen Bezugszeichen wie dort gekennzeichnet.

Die Spulenanordnung 140 und die zu ihrem Schutz vorgesehene Schutzplatte 122 sind in einer flachen Ausnehmung eines aus elektrisch isolierendem oder schlecht leitendem Material bestehenden Trägerrahmens 124 angeordnet, der sich in der gezeigten Längsrichtung sowohl nach vorne, als auch nach hinten über den Bereich der Spulenanordnung hinaus schräg in Richtung Magnetisierungseinheit, das heißt vom Prüfling weg erstreckt. Unmittelbar neben der Ausnehmung für die Sondenanordnung und die Schutzplatte sind relativ flache, erste Schutzelemente 170 aus verschleißfestem Material, z.B. einem Metall oder einer Keramik, angeordnet, deren dem Prüfling zugewandte flachen Außenflächen fast bündig mit der Außenseite der Schutzplatte 122 liegen, diese jedoch zum Prüfling hin etwas überragen. Da diese Elemente minimal über die Schutzplatte vorstehen, findet in der Regel ein Schleifkontakt nur über diese Elemente und nur bei stärkerer Krümmung der Prüflingsoberfläche auch über die Schutzplatte statt. An die Schutzelemente schließen sich jeweils nach außen Kufen 175 aus verschleißfestem Werkstoff, z.B. einer Keramik, an, die an der dem Prüfling zugewandten Vorderseite des Rahmens 124 in einer entsprechenden Ausnehmung befestigt sind und die Schrägflächen 176 haben, welche in spitzem Winkel zu der durch die Außenseite der Schutzplatte definierten Arbeitsfläche des Messwandlers jeweils nach außen ansteigend verlaufen. Wird nun der EMAT mit einer Bewegungskomponente parallel zur Längsachse 162 des Prüflings relativ zur Prüflingsoberfläche 161 bewegt, und hat diese Prüflingsoberfläche lokale Unebenheiten in Form von Erhebungen, so könnten diese beim Überlaufen die Schutzplatte und ggf. die Spulenanordnung beschädigen. Dies wird mit Hilfe der Kufen 175 und der Schutzelemente 170 verhindert, da bei Auftreten einer Erhebung an der Prüflingsoberfläche diese zuerst an die Schrägfläche einer Kufe treffen und im weiteren Verlauf die gesamte Sondeneinheit 120 unter Verringerung der Dicke des Zwischenraumes 125 in Richtung der Magnetisierungseinheit anheben würde, bevor die Unebenheit in den Bereich der Sondenanordnung einläuft. Eine stoßartige Belastung der empfindlichen Schutzplatte, wie sie z.B. beim Einlaufen oder Auslaufen eines Prüflings in einen bzw. aus einem Rotierkopf auftreten kann, wird dadurch zuverlässig verhindert.

Die Variante in Fig. 2 zeigt außerdem, dass es möglich ist, die Sondeneinheit 120 nicht ausschließlich über den Faltenbalg 130 an der Magnetisierungseinheit zu befestigen, sondern dass (alternativ oder zusätzlich) auch eine gesonderte Halteeinrichtung für die Sondeneinheit vorgesehen sein kann. Hierzu sind an den in Längsrichtung liegenden Endbereichen des Rahmens 124 im Rahmen nach oben, das heißt vom Prüfling weg gerichtete Gewindelöcher 182 vorgesehen, die es erlauben, mit Hilfe von Befestigungsschrauben 183 eine im Zusammenhang mit Fig. 5 näher erläuterte Halteeinrichtung 187 für die Sondeneinheit zu befestigen.

In Fig. 2 sind in Ergänzung zu den bereits beschriebenen Komponenten weitere Schutzmechanismen zum Schutz des EMAT gegen mechanische Beschädigung gezeigt. An der der Sondeneinheit abgewandten Oberseite des Gehäuses 117 der Magnetisierungseinheit ist mit Hilfe von Schrauben 191 ein jeweils in Längsrichtung nach vorne und nach hinten abragender Bügel 192 befestigt, an dessen freien Enden jeweils nach unten, das heißt in Richtung Prüfling ragende Kufen 193 angeschraubt sind. Diese Kufen liegen in Längsrichtung gesehen jeweils vor bzw. hinter den an der Sondeneinheit angebrachten Kufen 175 und überragen diese nach außen. In den dem Prüfling zugewandten Endabschnitten sind nach außen abgerundete Stützabschnitte 195 ausgebildet. Die Bügel 192 mit den daran angebrachten Kufen 193 dienen als Abstandshalter 190 zur direkten Abstützung der Magnetisierungseinheit an der Prüflingsoberfläche und sind bezüglich der Abstützhöhe so bemessen, dass bei Berührungskontakt der Stützabschnitte 195 mit der Prüflingsoberfläche 161 die Sondeneinheit nur so weit in Richtung Magnetisierungseinheit gedrückt werden kann, dass ein endlicher Mindestabstand zwischen der Magnetisierungseinheit und der Sondeneinheit verbleibt und diese einander nicht berühren können. Falls ein Berührungskontakt auftritt, so findet der Kontakt zwischen der Magnetisierungseinheit und der Innenseite des elastischen Faltenbalgmaterials statt, das in diesem Bereich eine elastisch nachgiebige Zwischenschicht bildet und eventuelle Schläge abdämpfen kann. Dadurch ist es möglich, mit Hilfe des EMATs ohne die Gefahr von Beschädigung des EMATs auch sehr unebene Prüflingsoberflächen an ggf. nicht perfekt geraden Prüflingen zu prüfen.

Bei der Abtastung der Oberfläche des Prüfmaterials kann sich, wie bereits erwähnt, der Luftspalt 125 zwischen Sondeneinheit 120 und Magnetisierungseinheit 110 in Abhängigkeit von der Beschaffenheit der Oberfläche des Prüfmaterials und der Geradheit des Prüfgutes verändern. Im Falle von sehr starker Abweichung von der Geradheit könnte es nun passieren, dass der Luftspalt 125 völlig verschwindet, so dass die Sondeneinheit gegen die Magnetisierungseinheit gedrückt wird. Wenn die Halterung der Magnetisierungseinheit zu einem gewissen Grade flexibel gestaltet ist, dann kann zwar auch in diesem Fall nach wie vor ein weiteres Ausweichen möglich sein, allerdings würden dann die Sondeneinheit 120 und die Magnetisierungseinheit 110 gemeinsam bewegt und es würde jetzt die große magnetische Anziehungskraft zwischen der Magnetisierungseinheit und dem Prüfmaterial auch auf die Sondeneinheit einwirken, was die Standzeit der Sondeneinheit spürbar verringern würde. Durch die Abstandhalter 190 wird dies verhindert. Denn an den Enden der Bügel 192 sind die Kufen 193 befestigt und derart dimensioniert, dass sie in Berührungskontakt mit der Oberfläche des Prüfmaterials kommen, bevor der Luftspalt 125 völlig verschwunden ist. Dadurch wird verhindert, dass im Falle von sehr krummem Prüfmaterial eine stark erhöhte Kraft auf die Sondeneinheit einwirkt, wodurch hohe Standzeiten sichergestellt sind.

In Figur 3 ist eine von zahlreichen Möglichkeiten zum Aufbau einer induktiven Spulenanordnung gezeigt. Die Spulenanordnung 300 ist nach Art gedruckter Leiterbahnen auf einen flexiblen Träger 302 aus elektrisch isoliertem Kunststoff aufgebracht. Dargestellt ist eine Anordnung mit acht Spulen, die in einer geraden Linie angeordnet sind. Die Form der zweiten Spule von links (Nr. 2) ist zur Illustration durch fette Linien hervorgehoben. Jede der Spulen besitzt eine symmetrische Struktur mit einem Bereich B in der Mitte, in dem die Leiterbahnen parallel und in derselben Richtung durchlaufen werden. Die Rückleitungen sind aufgeteilt in einen Teil rechts und in einen Teil links vom zentralen Bereich B. Dort werden die Leiterbahnen in umgekehrter Richtung vom Strom durchflossen. Die Rückleitungsbereiche unmittelbar benachbarter Spulen überlappen einander in Überlappungsbereichen A. Zur Verdeutlichung sind in Fig. 4 schematisch zwei unmittelbar benachbarte induktive Spulen in vereinfachter Form dargestellt. Gezeigt sind dabei die Stromrichtungen in zwei benachbarten Spulen in den direkt benachbarten mittleren Bereichen B, und in den mittig dazwischen liegenden Rückleitungen, die in einem Überlappungsbereich A räumlich überlappen. Durch die Stromrichtungspfeile ist angedeutet, dass die unmittelbar benachbarten Sonden gegenphasig, das heißt mit 180° Phasenversatz, mit Wechselspannung angeregt werden, so dass die im Überlappungsbereich A liegenden Rückleitungen der beiden benachbarten induktiven Spulen in gegensinniger Richtung vom Strom durchflossen werden. Ordnet man nun mehrere Spulen überlappend so an, dass sich die Rückleitungen benachbarter Spulen genau übereinander befinden, dann heben sich die Beiträge der Rückleitungen gegenseitig auf, wenn die induktiven Spulen gleichzeitig, aber mit abwechselnder Phase von einer Spule zur nächsten Spule angeregt werden.

Besonders unter diesen Bedingungen wird auf die Bereitstellung von Magnetfeldkonzentratoren zwischen dem Magnetsystem der Magnetisierungseinheit und der Spulenanordnung der Sondeneinheit verzichtet. In konventionellen elektromagnetisch-akustischen Messwandlern sind zwischen dem Magnetsystem und der Spulenanordnung sogenannte Magnetfeldkonzentratoren vorgesehen, um den vom Magnetsystem erzeugten Magnetfluss jeweils in die zentralen Bereiche der Spulen einer Spulenanordnung (entsprechend den Bereichen B in Fig. 4) zu konzentrieren und die Rückleitungen möglichst wenig dem magnetischen Feld auszusetzen. Bei der Anordnung der induktiven Spulen mit Überlappung der Rückleitungen sind dagegen keine Magnetfeldkonzentratoren notwendig, da sich die Beiträge der Rückleitungen aufheben. Es sind auch andere Gestaltungen von Spulenanordnungen möglich, bei denen auf Magnetfeldkonzentratoren verzichtet werden kann. Das im Prüflingsmaterial erzeugte Schallfeld wird dann in der Regel anders verlaufen als bei Systemen mit Konzentratoren.

Eine Spulenanordnung ähnlich der in Figur 3 gezeigten Anordnung kann sowohl durch Anordnung von mehreren gewickelten Einzelspulen erreicht werden, wie auch durch die gezeigte Implementierung einer entsprechenden Leiterstruktur auf einem isolierenden Träger in einem einzigen Bauteil.

Auch im Falle dieser Anordnung der induktiven Spulen oder bei gleichphasiger Anregung ist es möglich, ohne Magnetfeldkonzentratoren zu arbeiten. Betreibt man zum Beispiel die in Figur 3 dargestellte Spulenanordnung in der Art, dass alle Spulen mit gleicher Phase betrieben werden, so werden die beiden übereinander liegenden Rückleitungsbereiche zwischen unmittelbar benachbarten Spulen in umgekehrter Richtung im Vergleich zu den Mittelteilen B der benachbarten Spulen vom Strom durchflossen. Dies wirkt sich im Ergebnis so aus, als ob zwischen zwei Spulen einer Spulenanordnung eine weitere läge, die im Vergleich zu den beiden jeweils benachbarten Spulen gegenphasig zu diesen betrieben wird.

Elektromagnetisch-akustische Messwandler der hier anhand von einigen Beispielen beschriebenen Art können für unterschiedlichste Prüfaufgaben verwendet und in Prüfvorrichtungen mit unterschiedlichsten Konstruktionen implementiert werden. In Fig. 5 ist eine Implementierung dargestellt, wie sie zum Beispiel für die Kernfehlerprüfung von Stangenmaterial verwendet werden kann. Der Prüfling 160 wird entlang seiner Längsachse 162 mit hoher Geschwindigkeit (z.B. einige m/s) durch die Prüfvorrichtung bewegt. Die Prüfvorrichtung hat einen Rotierkopf, an dem mehrere elektromagnetisch-akustische Messwandler mit Hilfe verschwenkbarer Hebelanordnungen so angeordnet sind, dass die Messwandler in Schleifkontakt mit der Prüflingsoberfläche 161 stehen (bei anderen Ausführungsformen besteht ein kleiner Luftspalt zwischen beiden) und diese bei Rotation des Rotierkopfes entlang von Schraubenbahnen abtasten, die bei geeigneter Anpassung der Rotationsgeschwindigkeit des Rotierkopfes an die Durchlaufgeschwindigkeit des Prüflings aneinander anstoßen bzw. überlappen können, um eine lückenlose Prüfung des Prüflings sicherzustellen. Der Grundaufbau von Rotierköpfen ist an sich bekannt und wird daher hier nicht näher beschrieben. In Fig. 5 ist vom Rotierkopf nur ein Teil des Rotors 200 gezeigt, der koaxial mit der Längsachse 162 des Prüflings rotiert.

Der elektromagnetisch-akustische Messwandler 100 ist mit Hilfe einer Schwenkhebelanordnung 189 am Rotor 200 schwenkbeweglich befestigt. Der EMAT umfasst die im Betrieb in Schleifkontakt mit der Prüflingsoberfläche stehende Sondeneinheit 120, die mit radialem Abstand dazu angeordnete Magnetisierungseinheit 110 und den flexiblen Balg 130 als flexible Verbindung zwischen diesen voneinander gesonderten und relativ zueinander beweglichen Baugruppen. Die Magnetisierungseinheit 110 ist an einer ersten Halteeinrichtung 185 in Form eines Schwenkhebels befestigt, der am Rotor 200 um eine Drehachse 186 drehbar gelagert ist und sich um diese Achse leicht bewegen kann. Die Sondeneinheit 120 ist an einer zweiten Halteeinrichtung 187 in Form eines Schwenkhebels befestigt, der an dem Schwenkhebel 185, das heißt an der ersten Halteeinrichtung, verschwenkbar befestigt ist und sich gegenüber diesem um eine Drehachse 188 leicht verdrehen kann. Bei der Verschwenkung der ersten Halteeinrichtung 185 wird der gesamte EMAT in Richtung auf den Prüfling bzw. vom Prüfling weg bewegt. Jede Relativbewegung der Sondeneinheit auf die Magnetisierungseinheit zu oder von der Magnetisierungseinheit weg ist dagegen mit einer Verschwenkung der zweiten Halteeinrichtung 187 gegenüber der ersten Halteeinrichtung 185 verbunden, wobei die Halteeinrichtung die Bewegung der Sondeneinheit so führt, dass diese in Axialrichtung nicht verkippt oder verdreht wird, sondern im Wesentlichen nur eine translatorische Bewegung zur Magnetisierungseinheit hin oder von dieser weg ausführt. Die zweite Halteeinrichtung stellt dabei eine passive Führung dar. Die Relativbewegung der Sondeneinheit gegenüber der Magnetisierungseinheit wird ausschließlich über die Oberflächenbeschaffenheit des Prüflings kontrolliert, die ggf. zu einer Auslenkung der auf ihr abgleitenden Sondeneinheit gegenüber der Magnetisierungseinheit führt.

Aus mechanischen und prüftechnischen Gründen ist es in der Regel sinnvoll, eine mit der gezeigten Anordnung identische Anordnung um 180° versetzt zur gezeigten Anordnung am Rotor anzubringen, so dass eine insgesamt ausgewuchtete Prüfanordnung entsteht, die mit hoher Drehgeschwindigkeit um den durchlaufenden Prüfling herum rotieren kann.

## Patentansprüche

1. Elektromagnetisch-akustischer Messwandler zur Ultraschallprüfung von im Wesentlichen aus elektrisch leitfähigem Material bestehenden Prüflingen mit:
einem Magnetsystem (115) zur Erzeugung eines zum Eindringen in den Prüfling (160) vorgesehenen Magnetfeldes sowie
einer induktiven Spulenanordnung (140, 300) zur Erzeugung eines diesem Magnetfeld im Prüfling überlagerten elektromagnetischen Wechselfeldes sowie zur Erfassung von aus dem Prüfling emittierten elektromagnetischen Wechselfeldern, wobei
das Magnetsystem (115) in einer Magnetisierungseinheit (110) angeordnet ist,
die Spulenanordnung in einer von der Magnetisierungseinheit gesonderten Sondeneinheit (120) angeordnet ist, die sich immer im Bereich des von der Magnetisierungseinheit erzeugten Magnetfeldes befindet,
die Sondeneinheit (120) relativ zur Magnetisierungseinheit (110) im Bereich des Magnetfeldes beweglich gelagert ist, so dass sich die Sondeneinheit während des Betriebes des Messwandlers relativ zur Magnetisierungseinheit bewegen kann,
zwischen der Magnetisierungseinheit (110) und der Sondeneinheit (120) ein Zwischenraum (125) mit variabler Größe liegt,
der Zwischenraum mit Hilfe einer flexiblen Hülle (130) verschmutzungsdicht gekapselt ist, und
der Zwischenraum zwischen dem Magnetsystem (115) und der Spulenanordnung (140) frei von Magnetfeldkonzentratoren ist.

2. Messwandler nach Anspruch 1, worin die flexible Hülle einen Faltenbalg (130) aus flexiblem Material aufweist, wobei der Faltenbalg insbesondere als Kunststoffbalg oder als Lederbalg ausgeführt ist.

3. Messwandler nach Anspruch 1 oder 2, worin die Sondeneinheit (120) mit Hilfe einer elastisch nachgiebigen Halterung (130) an der Magnetisierungseinheit (110) befestigt ist, worin die elastisch nachgiebige Halterung vorzugsweise einen Faltenbalg (130) umfasst, der einen Zwischenraum (125) zwischen der Magnetisierungseinheit (110) und der Sondeneinheit (120) verschmutzungsdicht abdichtet.

4. Messwandler nach einem der vorhergehenden Ansprüche, worin die Magnetisierungseinheit (110) an einer ersten Halteeinrichtung (185) und die Sondeneinheit (120) an einer von der ersten Halteeinrichtung gesonderten zweiten Halteeinrichtung (187) befestigt ist, wobei vorzugsweise die zweite Halteeinrichtung (187), welche die Sondeneinheit (120) hält, gelenkig mit der ersten Halteeinrichtung (185) verbunden ist.

5. Messwandler nach einem der vorhergehenden Ansprüche, worin ein Nominalabstand zwischen dem Magnetsystem (115) und der Spulenanordnung (140) weniger als 8 mm, insbesondere weniger als 5 mm beträgt.

6. Messwandler nach einem der vorhergehenden Ansprüche, worin mindestens eine Abstandhalteeinrichtung zur Begrenzung der gegenseitigen Auslenkung von Magnetisierungseinheit (110) und Sondeneinheit (120) auf einen endlichen Mindestabstand vorgesehen ist.

7. Messwandler nach einem der vorhergehenden Ansprüche, worin zwischen der Magnetisierungseinheit (110) und der Sondeneinheit (120) eine aufschlagdämpfende Einrichtung angeordnet ist, insbesondere eine Schicht aus elastisch nachgiebigem Material.

8. Messwandler nach einem der vorhergehenden Ansprüche, worin an einem Gehäuse der Magnetisierungseinheit Abstandhalter (190) mit Stützabschnitten (193) zur direkten Abstützung der Abstandhalter auf der Prüflingsoberfläche (161) des Prüflings (160) angebracht sind, wobei die Abstandhalter so bemessen sind, dass bei Auftreffen der Abstandhalter auf der Prüflingsoberfläche ein endlicher Abstand zwischen einer maximal in Richtung Magnetisierungseinheit ausgelenkten Sondeneinheit (120) und der Magnetisierungseinheit (110) verbleibt.

9. Messwandler nach einem der vorhergehenden Ansprüche, worin die Spulenanordnung (140, 300) mehrere nebeneinander angeordnete Einzelspulen aufweist, wobei Leitungsabschnitte unmittelbar benachbarter Einzelspulen in einen Überlappungsbereich (A) gegenseitig überlappen.

10. Messwandler nach einem der vorhergehenden Ansprüche, worin die Spulenanordnung (140, 300) mehrere nebeneinander angeordnete Einzelspulen aufweist, wobei unmittelbar benachbarte Einzelspulen der Spulenanordnung gegenphasig geschaltet sind.

11. Messwandler nach einem der vorhergehenden Ansprüche, worin die Spulenanordnung (300) Leiterbahnen aufweist, die auf einem Träger (302) aus elektrisch isolierendem Material aufgebracht sind.

12. Prüfvorrichtung zur Ultraschallprüfung von im Wesentlichen aus elektrisch leitfähigem Material bestehenden Prüflingen, **dadurch gekennzeichnet, dass** sie mindestens einen elektromagnetisch-akustischen Messwandler gemäß einem der vorhergehenden Ansprüche aufweist.

## Claims

1. Electromagnetic acoustic transducer for ultrasound testing of units under test which are composed substantially of an electrically conductive material, having:
a magnet system (115) for production of a magnetic field, which is intended to penetrate into the unit under test (160), and
an inductive coil arrangement (140, 300) for production of an electromagnetic alternating field, which is superimposed on this magnetic field in the unit under test, and for detection of electromagnetic alternating fields emitted from the unit under test, wherein
the magnet system (115) is arranged in a magnetization unit (110),
the coil arrangement is arranged in a probe unit (120) which is separate from the magnetization unit and is always located in the area of the magnetic field which is produced by the magnetization unit,
the probe unit (120) is mounted such that it can move relative to the magnetization unit (110) in the area of the magnetic field such that the probe unit can move relative to the magnetization unit during operation of the transducer,
an intermediate space (125) of variable size is located between the magnetization unit (110) and the probe unit (120),
the intermediate space is encapsulated in a contamination-proof manner with the aid of a flexible casing (130), and
the intermediate space between the magnet system (115) and the coil arrangement (140) is free of magnetic field concentrators.

2. Transducer according to claim 1, wherein the flexible casing has a bellows (130) composed of flexible material, wherein the bellows is, in particular, in the form of a plastic bellows or a leather bellows.

3. Transducer according to claim 1 or 2, wherein the probe unit (120) is attached to the magnetization unit (110) with the aid of an elastically flexible holder (130), wherein the elastically flexible holder preferably has a bellows (130) which seals an intermediate space (125) between the magnetization unit (110) and the probe unit (120) in a contamination-proof manner.

4. Transducer according to any of the preceding claims, wherein the magnetization unit (110) is attached to a first holding device (185) and the probe unit (120) is attached to a second holding device (187) which is separate from the first holding device, wherein the second holding device (187), which holds the probe unit (120), is preferably connected in an articulated manner to the first holding device (185).

5. Transducer according to any of the preceding claims, wherein a nominal distance between the magnet system (115) and the coil arrangement (140) is less than 8 mm, in particular less than 5 mm.

6. Transducer according to any of the preceding claims, wherein at least one spacer device is provided in order to limit the mutual deflection of the magnetization unit (110) and the probe unit (120) to a finite minimum separation.

7. Transducer according to any of the preceding claims, wherein an impact-damping device is arranged between the magnetization unit (110) and the probe unit (120), in particular a layer composed of elastically flexible material.

8. Transducer according to any of the preceding claims, wherein spacers (190) with supporting sections (193) for directly supporting the spacers on the surface (161) of the unit under test (160) are fitted to a housing of the magnetization unit, wherein the spacers are of such a size that, when the spacers strike the surface of the unit under test, a finite separation remains between the magnetization unit (110) and a probe unit (120) which has been deflected to the maximum extent in the direction of the magnetization unit.

9. Transducer according to any of the preceding claims, wherein the coil arrangement (140, 300) has a plurality of individual coils which are arranged alongside one another, wherein line sections of immediately adjacent individual coils overlap one another into an overlap area (A).

10. Transducer according to any of the preceding claims, wherein the coil arrangement (140, 300) has a plurality of individual coils which are arranged alongside one another, wherein immediately adjacent individual coils of the coil arrangement are switched in antiphase.

11. Transducer according to any of the preceding claims, wherein the coil arrangement (300) has conductor tracks which are fitted to a mount (302) composed of electrically insulating material.

12. Test apparatus for ultrasound testing of units under test which are composed substantially of electrically conductive material, **characterized in that** the test apparatus has at least one electromagnetic acoustic transducer according to any of the preceding claims.

## Revendications

1. Transducteur électromagnétique-acoustique pour le contrôle par ultrasons d'éprouvettes composées essentiellement d'un matériau électriquement conducteur, avec:
un système d'aimants (115) pour la production d'un champ magnétique prévu pour pénétrer dans l'éprouvette (160), ainsi que
un agencement de bobines d'induction (140, 300) pour la production d'un champ électromagnétique alternatif superposé à ce champ magnétique dans l'éprouvette ainsi que pour la détection de champs électromagnétiques alternatifs émis à partir de l'éprouvette, dans lequel le système d'aimants (115) est disposé dans une unité de magnétisation (110),
l'agencement de bobines est disposé dans une unité de sonde (120) séparée de l'unité de magnétisation, qui se trouve toujours dans la région du champ magnétique produit par l'unité de magnétisation,
l'unité de sonde (120) est montée de façon mobile par rapport à l'unité de magnétisation (110) dans la région du champ magnétique, de telle manière que l'unité de sonde puisse se déplacer par rapport à l'unité de magnétisation pendant le fonctionnement du transducteur,
il existe entre l'unité de magnétisation (110) et l'unité de sonde (120) un espace intermédiaire (125) de grandeur variable,
l'espace intermédiaire est protégé par encapsulation de façon étanche contre l'encrassement à l'aide d'une enveloppe flexible (130), et
l'espace intermédiaire est dépourvu de concentrateurs de champ magnétique entre le système d'aimants (115) et l'agencement de bobines (140).

2. Transducteur selon la revendication 1, dans lequel l'enveloppe flexible présente un soufflet plissé (130) en matériau flexible, dans lequel le soufflet plissé est formé en particulier par un soufflet en matière plastique ou par un soufflet en cuir.

3. Transducteur selon la revendication 1 ou 2, dans lequel l'unité de sonde (120) est fixée à l'unité de magnétisation (110) à l'aide d'un support élastiquement déformable (130), dans lequel le support élastiquement déformable comprend de préférence un soufflet plissé (130), qui assure l'étanchéité contre l'encrassement d'un espace intermédiaire (125) entre l'unité de magnétisation (110) et l'unité de sonde (120).

4. Transducteur selon l'une quelconque des revendications précédentes, dans lequel l'unité de magnétisation (110) est fixée à un premier dispositif de support (185) et l'unité de sonde (120) est fixée à un second dispositif de support (187) séparé du premier dispositif de support, dans lequel le second dispositif de support (187), qui maintient l'unité de sonde (120), est de préférence relié de façon articulée au premier dispositif de support (185).

5. Transducteur selon l'une quelconque des revendications précédentes, dans lequel une distance nominale entre le système d'aimants (115) et l'agencement de bobines (140) vaut moins de 8 mm, en particulier moins de 5 mm.

6. Transducteur selon l'une quelconque des revendications précédentes, dans lequel il est prévu au moins un dispositif de maintien de distance pour la limitation de l'écartement mutuel de l'unité de magnétisation (110) et de l'unité de sonde (120) à une distance finale minimale.

7. Transducteur selon l'une quelconque des revendications précédentes, dans lequel un dispositif d'amortissement des chocs est disposé entre l'unité de magnétisation (110) et l'unité de sonde (120), en particulier une couche en un matériau élastiquement déformable.

8. Transducteur selon l'une quelconque des revendications précédentes, dans lequel des éléments d'écartement (190) avec des parties d'appui (193) sont montés sur un boîtier de l'unité de magnétisation pour l'appui direct des éléments d'écartement sur la surface d'éprouvette (161) de l'éprouvette (160), dans lequel les éléments d'écartement sont dimensionnés de telle manière que lors de la pose des éléments d'écartement sur la surface d'éprouvette il reste une distance finale entre une unité de sonde (120) déplacée au maximum en direction de l'unité de magnétisation et l'unité de magnétisation (110).

9. Transducteur selon l'une quelconque des revendications précédentes, dans lequel l'agencement de bobines (140, 300) présente plusieurs bobines individuelles disposées les unes à côté des autres, dans lequel des parties de ligne de bobines individuelles immédiatement voisines se chevauchent mutuellement dans une zone de chevauchement (A).

10. Transducteur selon l'une quelconque des revendications précédentes, dans lequel l'agencement de bobines (140, 300) présente plusieurs bobines individuelles disposées les unes à côté des autres, dans lequel des bobines individuelles immédiatement voisines de l'agencement de bobines sont connectées en opposition de phase.

11. Transducteur selon l'une quelconque des revendications précédentes, dans lequel l'agencement de bobines (300) présente des voies conductrices, qui sont déposées sur un support (302) en un matériau électriquement isolant.

12. Dispositif de contrôle pour le contrôle par ultrasons d'éprouvettes composées essentiellement d'un matériau électriquement conducteur, **caractérisé en ce qu'**il présente au moins un transducteur électromagnétique-acoustique selon l'une quelconque des revendications précédentes.
